# EUROPEAN PATENT SPECIFICATION

(11) **EP 4 120 300 B1**
(45) Date of publication and mention of the grant of the patent: **06.05.2026**
(21) Application number: 22180732.4
(22) Date of filing: 23.06.2022
(51) Int. Cl.: H01H 3/02

(54) **EMERGENCY STOP BUTTON ASSEMBLY AND CHARGING PILE**
NOTAUSTASTENANORDNUNG UND LADESTAPEL
ENSEMBLE BOUTON D'ARRÊT D'URGENCE ET PILE DE CHARGE

(30) Priority: 16.07.2021 CN 202121632469 U
(43) Date of publication of application: 18.01.2023
(73) Proprietor: Sungrow Power Supply Co., Ltd., Hefei, Anhui 230088 (CN)
(72) Inventor: ZHEN, Yuanlu, Hefei, 230088 (CN); ZHANG, Qingfeng, Hefei, 230088 (CN); WANG, Rui, Hefei, 230088 (CN); ZHOU, Chenghua, Hefei, 230088 (CN); CAO, Liang, Hefei, 230088 (CN)
(74) Representative: Rooney, John-Paul

(56) References cited:
- CN-U- 207 082 449
- DE-A1- 4 101 493
- US-A- 4 703 141
- US-A1- 2019 237 277

## Description

### FIELD

The present application relates to the technical field of emergency stop of equipment, and in particular to an emergency stop button assembly and a charging pile.

### BACKGROUND

An emergency stop button is used to cut off the power of the equipment connected to it, so as to protect the life and property of users. A conventional method for mounting the emergency stop button is to provide a mounting hole in the mounting plate of the equipment, and fix the emergency stop button in the mounting hole through nuts, however, with this mounting method, the emergency stop button is apt to be accidentally touched. In the conventional technology, the emergency stop button may be arranged in a mounting base which is welded to the mounting hole, so as to prevent the emergency stop button from being accidentally touched, however, this mounting method by welding requires a large amount of work and is inconvenient to disassemble.

The patent of CN207082449U discloses a protection casing for an emergency stop button of a charging pile, including: a protection casing body and a connecting piece or member, the protection casing body is attached to the charging post to prevent the emergency stop button from being accidentally activated. The protection casing body has an urgent destruction piece which may be broken off by a user to reveal the emergency stop button. The patent of DE4101493A1 discloses an electrical emergency switching unit for use on machine systems which has an actuator stage and a contact module that is separate and is latched onto the lower section of the housing. The contact module has a pair of switch elements, one of which is a normally open type and the other normally closed. The actuator has a pin, which, when operated in an axial direction, acts against the switch element pins. The pins are spring biased in the vertical direction. If the actuator pin is damaged the switch elements adopt a failsafe position.

### SUMMARY

In order to improve upon prior techniques, the emergency stop button assembly according to the present application includes a mounting base, an emergency stop button and a fastener. The mounting base includes a first end and a second end arranged oppositely with respect to each other, the first end of the mounting base is provided with an accommodating groove, and the second end of the mounting base is configured to pass through a mounting hole of a mounting plate; the emergency stop button is mounted in the accommodating groove; the fastener is detachably mounted on the second end of the mounting base, to clamp the mounting plate by cooperation with the mounting base when the fastener is mounted on the second end of the mounting base. The emergency stop button assembly further includes a protective cover. A limiting groove is provided in a periphery of a groove opening of the accommodating groove in a recessed manner, and the protective cover is mounted at the limiting groove to cover the groove opening of the accommodating groove. The protective cover includes a support ring and a hand-hold portion, each of both sides of the hand-hold portion is provided with a connecting segment configured to be connected with the support ring, and the support ring is mounted at the limiting groove.

In an embodiment, the emergency stop button includes a trigger portion and a connecting terminal connected in sequence. The trigger portion is located in the accommodating groove, and the connecting terminal extends out of the second end of the mounting base.

In an embodiment, the connecting terminal and the mounting base are integrally formed by injection molding; or, the second end of the mounting base is provided with a through hole, and the connecting terminal is arranged to extend out of the second end of the mounting base through the through hole.

In an embodiment, the mounting base is cylindrical, an outer peripheral wall of the mounting base is provided with threads. A limiting portion is arranged to protrude outward from on the outer peripheral wall of the mounting base. The fastener is a nut, and the nut is screwed to the mounting base at the second end of the mounting base.

In an embodiment, the limiting portion is a flange provided on a peripheral wall of the first end of the mounting base; and/or, the nut is a hexagonal nut.

In an embodiment, the emergency stop button assembly further includes a sealing ring. The sealing ring is sheathed on an outer peripheral wall of the mounting base and is arranged to abut against the limiting portion.

In an embodiment, a positioning protrusion is provided on a side wall of the limiting groove, a positioning notch is provided on an outer peripheral wall of the support ring, the positioning protrusion is arranged in the positioning notch, and the positioning notch is located at a bisecting position of a corresponding segment of the support ring between the two connecting segments.

In an embodiment, an adhesive layer is arranged between the support ring and the limiting groove.

In an embodiment, an end face of the first end of the mounting base is provided with a fluid guiding protruding portion, and the fluid guiding protruding portion includes a first inclined guide plane and a second inclined guide plane. One side of the first inclined guide plane is connected to a peripheral edge of the groove opening of the limiting groove. The second inclined guide plane is connected to the other side of the first inclined guide plane. An included angle between the first inclined guide plane and a side wall of the accommodating groove is greater than 90° and less than 180°. An included angle between the second inclined guide plane and the side wall of the accommodating groove is less than 90°.

In an embodiment, an included angle between the a side wall of the accommodating groove and a bottom wall of the accommodating groove is greater than 90° and less than 180°.

A charging pile is further provided according to the present application. The charging pile includes a cabinet and the emergency stop button assembly according to any one of the above solutions. The cabinet is provided with a mounting plate, and the mounting plate is provided with a mounting hole; the emergency stop button assembly is mounted in the mounting hole.

According to the technical solution of the present application, the fastener is mounted at the mounting base, so that the emergency stop button assembly is mounted at the mounting hole of the mounting plate; or the fastener is detached from the mounting base, so as to detach the emergency stop button assembly from the mounting hole of the mounting plate. The fastener and the mounting base are detachably arranged to facilitate the disassembly between the emergency stop button assembly and the mounting hole.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
Figure 1 is a schematic view showing the structure of an emergency stop button assembly according to an embodiment of the present application;
Figure 2 is a schematic view showing the exploded structure of the emergency stop button assembly according to the embodiment of the present application;
Figure 3 is a schematic view showing installation of the emergency stop button assembly according to the embodiment of the present application;
Figure 4 is a cross-sectional view of the emergency stop button assembly according to the embodiment of the present application; and
Figure 5 is an enlarged view showing a portion A in Figure 4.

### Reference numerals in the drawings:

| | | | |
|---|---|---|---|
| 100 | emergency stop button assembly, | 20 | emergency stop button, |
| 10 | mounting base, | 21 | trigger portion, |
| 101 | first end, | 22 | connecting terminal, |
| 102 | second end, | 30 | fastener, |
| 11 | accommodating groove, | 40 | protective cover, |
| 111 | limiting groove, | 41 | support ring, |
| 112 | positioning protrusion, | 411 | positioning notch, |
| 12 | through hole, | 42 | hand-hold portion, |
| 13 | limiting portion, | 43 | connecting segment, |
| 14 | fluid guiding protruding portion, | 50 | sealing ring, |
| 141 | first inclined guide plane, | 60 | mounting plate, |
| 142 | second inclined guide plane. | | |

The realization of the objects, functional characteristics and advantages of the present application will be further described in conjunction with the embodiments and with reference to the drawings.

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

It should be noted that, all directional indicators (such as up, down, left, right, front, back......) in the embodiments of the present application are only used for explaining a relative position relationship and movement situation among components in a certain specific posture (as shown in the attached figures). If the specific posture changes, the directional indicators will change accordingly.

In addition, if there are descriptions related to "first", "second" and the like in the embodiments of the present application, the "first", "second" and the like are only used for descriptive purposes, and should not be understood as indicating or implying its relative importance or implicitly indicating the number of the indicated technical features. Therefore, the features defined with "first", "second" or the like may include at least one of the features explicitly or implicitly. In addition, the technical solutions between the various embodiments can be combined with each other, on the premise that they can be implemented by those skilled in the art. When the combination of technical solutions is contradictory or cannot be realized, it should be considered that such a combination of technical solutions does not exist, and is not within the protection scope of the present application.

An emergency stop button assembly 100 is provided according to the present application, which is used for emergency stop of equipment operation. The equipment may be charging piles, centralized inverters, wind power converters, energy storage converters, generators, elevators, etc. In the embodiment of the present application, the emergency stop button assembly 100 is specifically applied to a charging pile.

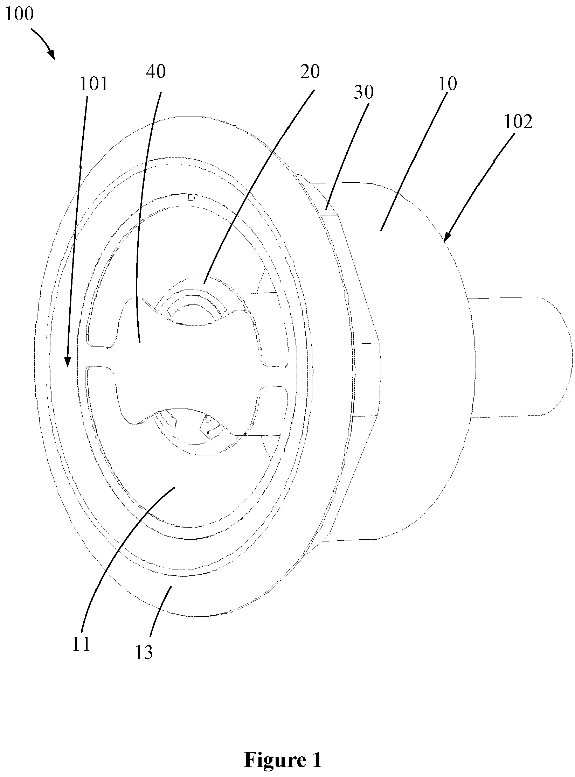

In an embodiment of the present application, as shown in Figures 1 to 3, the emergency stop button assembly 100 includes a mounting base 10, an emergency stop button 20 and a fastener 30. The mounting base 10 includes a first end 101 and a second end 102 oppositely arranged with respect to each other. The first end 101 of the mounting base 10 is provided with an accommodating groove 11, and the second end 102 of the mounting base 10 is configured to pass through a mounting hole of a mounting plate 60; the emergency stop button 20 is mounted in the accommodating groove 11; the fastener 30 is detachably mounted at the second end 102 of the mounting base 10, to clamp the mounting plate 60 with the mounting base 10 when the fastener is mounted at the second end 102 of the mounting base 10.

Specifically, the mounting base 10 is used to carry the emergency stop button 20, to mount the emergency stop button 20 at the mounting hole of the mounting plate 60 of the equipment. The accommodating groove 11 is used for accommodating the emergency stop button 20. A trigger portion 21 of the emergency stop button 20 is located in the accommodating groove 11, to avoid accidental touch of the emergency stop button 20 due to that the emergency stop button 20 is exposed to the outside. The emergency stop button 20 is used to connect with the equipment. When the emergency stop button 20 is triggered, the power supply of the equipment is cut off to stop the equipment. The fastener 30 and the mounting base 10 may cooperate with each other via threads, to achieve a detachable connection, or the fastener 30 may be elastic and sheathed on an outer periphery of the mounting base 10 to achieve the detachable connection; the fastener 30 is in cooperation with the mounting base 10 to clamp the mounting plate 60, so as to fix the mounting base 10 at the mounting hole.

According to the technical solution of the present application, the fastener 30 is mounted to the mounting base 10, so that the emergency stop button assembly 100 is mounted at the mounting hole of the mounting plate 60; or the fastener 30 is detached from the mounting base 10, so as to detach the emergency stop button assembly 100 from the mounting hole of the mounting plate 60. The fastener 30 and the mounting base 10 are detachably arranged to facilitate the assembly and disassembly between the emergency stop button assembly 100 and the mounting hole.

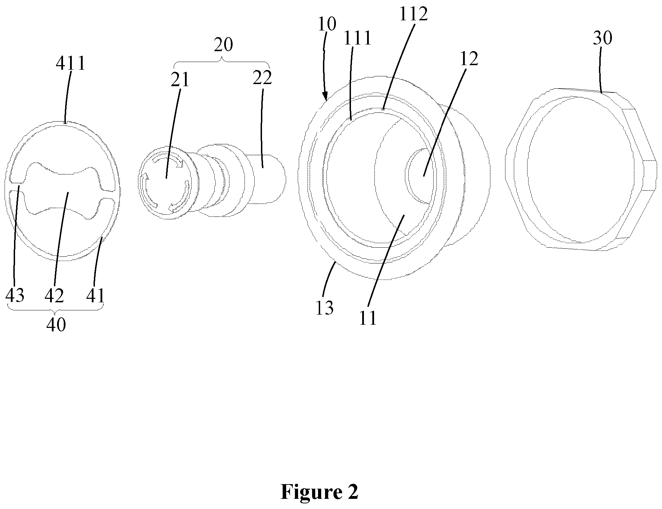

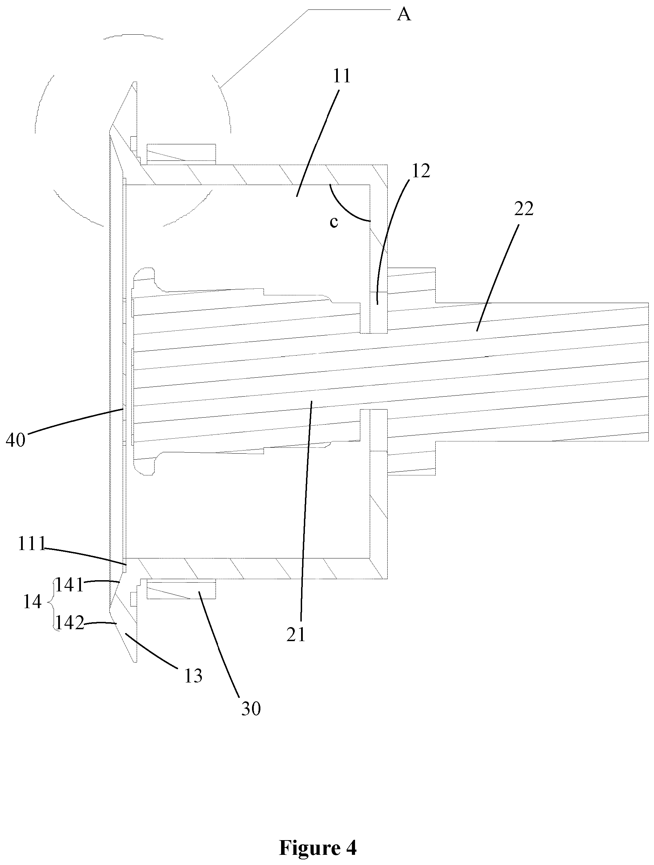

In one embodiment, as shown in Figures 2 and 4, the emergency stop button 20 includes a trigger portion 21 and a connecting terminal 22 connected in sequence. The trigger portion 21 is located in the accommodating groove 11, and the connecting terminal 22 extends out of the second end 102 of the mounting base 10.

Specifically, the trigger portion 21 and the connecting terminal 22 are sequentially connected along a direction from the first end 101 of the mounting base 10 to the second end 102 of the mounting base 10. The trigger portion 21 is electrically connected to the connecting terminal 22, so that an electrical signal generated by the trigger portion 21 can be transmitted via the connecting terminal 22. The trigger portion 21 has a trigger end face, and the user can trigger the emergency stop function of the emergency stop button 20 by pressing the trigger end face. The trigger end face is flush with a groove opening of the accommodating groove 11 or is located at a side of the groove opening of the accommodating groove 11 facing the second end 102 of the mounting base 10, so as to prevent the user from accidentally touching the trigger end face. One end of the connecting terminal 22 is located in the accommodating groove 11, and the other end of the connecting terminal extends out of the second end 102 of the mounting base 10. The trigger portion 21 is mounted on the connecting terminal 22 to be mounted in the accommodating groove 11. The connecting terminal 22 is used for connecting with the equipment, so as to transmit the emergency stop signal sent by the trigger portion 21 to the equipment, to stop the operation of the equipment.

Further, in this embodiment, the connecting terminal 22 and the mounting base 10 are integrally formed by injection molding. Specifically, an end or an outer side wall of the connecting terminal 22 is integrally formed with the mounting base 10 by injection molding, so as to reduce the steps for assembling the connecting terminal 22 and the mounting base 10, thereby improving the mounting efficiency.

Or, in another embodiment, a through hole 12 is provided at the second end 102 of the mounting base 10, and the connecting terminal 22 is arranged to extend out of the second end 102 of the mounting base 10 through the through hole 12. Specifically, the through hole 12 is provided with inner threads, and an outer peripheral wall of the connecting terminal 22 is provided with outer threads. The through hole 12 is screwed with the connecting terminal 22 to mount the connecting terminal 22 at the mounting base 10. Thread adhesive may be further provided between the through hole 12 and the connecting terminal 22 to enhance the sealing performance. Alternatively, an elastic sealing rubber ring is sheathed on the outer peripheral wall of the connecting terminal 22, an outer peripheral wall of the elastic sealing rubber ring is in interference fit with an inner peripheral wall of the through hole 12, to mount the connecting terminal 22 at the mounting base 10, which enhances the sealing performance at the same time.

Further, the connecting terminal 22 is detachably connected to the trigger portion 21, which is convenient to replace the trigger portion 21 when the trigger portion 21 fails. In other embodiments, the connecting terminal 22 and the trigger portion 21 may be integrally provided, which simplifies the mounting and improves the mounting efficiency.

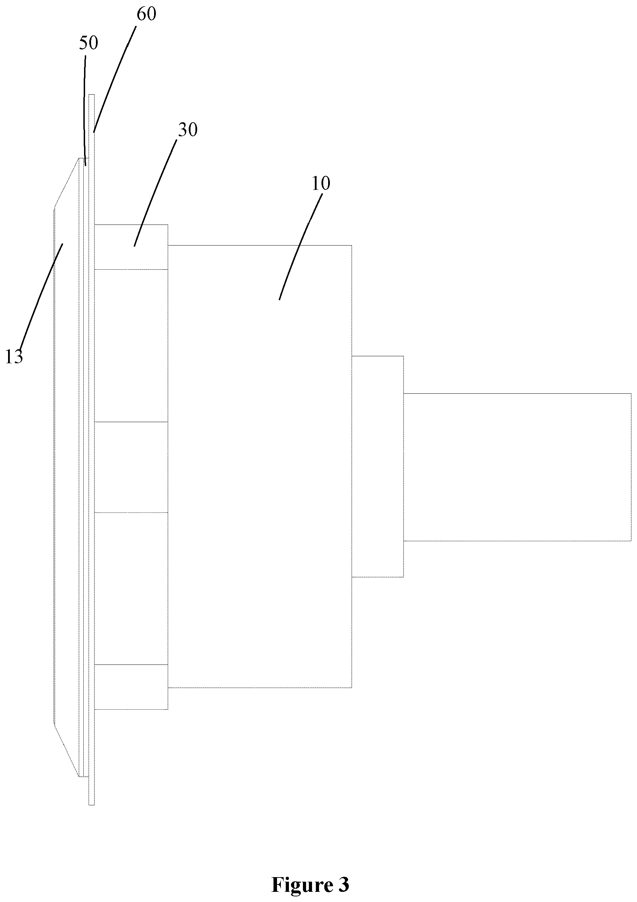

In an embodiment, as shown in Figure 3, the mounting base 10 is cylindrical, and an outer peripheral wall of the mounting base is provided with threads. A limiting portion 13 is arranged to protrude outward from the outer peripheral wall of the mounting base 10. The fastener 30 is a nut, and the nut is screwed to the mounting base 10 at the second end 102 of the mounting base 10. Specifically, when mounting the mounting base 10 in the mounting hole, the fastener 30 is rotated to move toward the first end 101 of the mounting base 10 until the fastener 30 and the limiting portion 13 clamp the mounting plate 60, and thus the mounting of the mounting base 10 is finished.

Further, the limiting portion 13 is a flange provided on a peripheral wall of the first end 101 of the mounting base 10; and/or, the nut is a hexagonal nut. Specifically, in this embodiment, the limiting portion 13 is disposed on the periphery of the first end 101 of the mounting base 10, so as to reduce the part of the mounting base 10 protruding from the mounting plate 60 when it is mounted in the mounting hole, which prevents the protruding part from obstructing the user's operation. In other embodiments, the limiting portion 13 may be protruding from the outer peripheral wall of the mounting base 10 near the first end 101, which is not limited too much.

In an embodiment, as shown in Figure 3, the emergency stop button assembly 100 further includes a sealing ring 50, the sealing ring 50 is sheathed on the outer peripheral wall of the mounting base 10 and is arranged to abut against the limiting portion 13. Specifically, when the mounting base 10 is mounted in the mounting hole, the limiting portion 13 presses the sealing ring 50 on a side of the mounting plate 60 facing the first end 101 of the mounting base 10, so as to form sealing on the outer periphery of the mounting hole, to prevent rainwater from entering the equipment through the mounting hole, and thus improving the sealing performance.

In an embodiment, as shown in Figures 1, 2 and 4, the emergency stop button assembly 100 further includes a protective cover 40. A limiting groove 111 is provided in a periphery of the groove opening of the accommodating groove 11 in a recessed manner. The protective cover 40 is mounted at the limiting groove 111 to cover the groove opening of the accommodating groove 11. Specifically, although the emergency stop button 20 is arranged inside the accommodating groove 11 of the mounting base 10, the user may still touch the emergency stop button 20 by mistake when using the equipment. The protective cover 40 is provided to cover the groove opening of the accommodating groove 11, to further prevent the user from accidentally touching the emergency stop button 20; and the user only needs to break the protective cover 40 when he needs to press the emergency stop button 20.

Further, the protective cover 40 includes a support ring 41 and a hand-hold portion 42. Each of both sides of the hand-hold portion 42 is provided with a connecting segment 43 configured to be connected with the support ring 41, and the support ring 41 is mounted at the limiting groove 111. Specifically, the support ring 41 is used to support the protective cover 40 at the groove opening of the accommodating groove 11; the hand-hold portion 42 is located above the emergency stop button 20, which prevents the user from touching the emergency stop button 20, specifically, the hand-hold portion 42 is closer to the first end 101 than the emergency stop button 20; the connecting segments 43 are used to connect the support ring 41 and the hand-hold portion 42, so that the hand-hold portion 42 is located above the emergency stop button 20. The user pinches and rotates the hand-hold portion 42 with fingers to break the connecting segments 43, so as to separate the support ring 41 and the hand-hold portion 42, and thus the protective cover 40 is broken.

Further, a positioning protrusion 112 is provided on a side wall of the limiting groove 111, and a positioning notch 411 is formed on an outer peripheral wall of the support ring 41. The positioning protrusion 112 is arranged in the positioning notch 411, and the positioning notch 411 is located at a bisecting position of a corresponding segment of the support ring 41 between the two connecting segments 43. Specifically, the positioning protrusion 112 is configured to cooperate with the positioning notch 411 to position and mount the protective cover 40, so as to ensure that the mounting positions of the protective cover 40 and the mounting base 10 in the emergency stop button assembly 100 are consistent. In this embodiment, four equal dividing points are provided on the support ring 41 to divide the support ring 41 into four equal segments. The connecting segments 43 are respectively arranged at two opposite equal dividing points of the four equal dividing points, and the positioning notch 411 is arranged at one of the remaining two equal dividing points. In other embodiments, the positioning notch 411 may be disposed at other positions on the support ring 41, which is not limited.

In an embodiment, an adhesive layer is provided between the support ring 41 and the limiting groove 111. Specifically, the support ring 41 is pasted in the limiting groove 111 through foam tape, so as to fix the protective cover 40 in the groove opening of the accommodating groove 11.

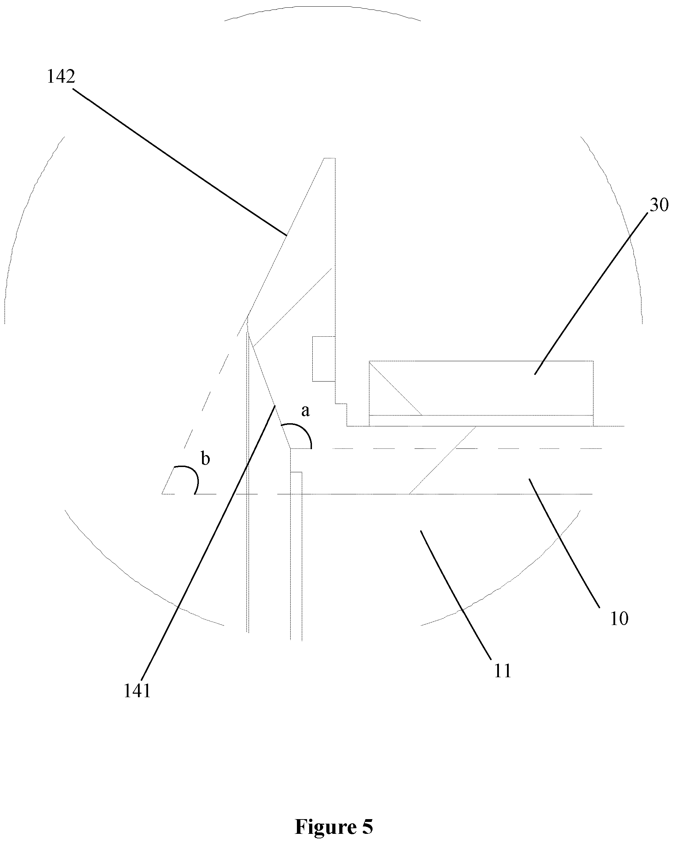

Further, as shown in Figures 4 and 5, an end face of the first end 101 of the mounting base 10 is provided with a fluid guiding protruding portion 14, and the fluid guiding protruding portion 14 includes a first inclined guide plane 141 and a second inclined guide plane 142. One side of the first inclined guide plane 141 is connected to a peripheral edge of the groove opening of the limiting groove 111, the second inclined guide plane 142 is connected to another side of the first inclined guide plane 141. An included angle "a" between the first inclined guide plane 141 and a side wall of the accommodating groove 11 is greater than 90° and less than 180°. An included angle "b" between the second inclined guide plane 142 and the side wall of the accommodating groove 11 is less than 90°.

Specifically, the mounting plate 60 is generally arranged on a side of the equipment, hence an axis of the mounting base 10 is parallel to the horizontal direction. The equipment is generally placed outdoors, and water is easily accumulated at the limiting groove 111. The fluid guiding protruding portion 14 can prevent the adhesive layer from losing its effect due to being soaked by rainwater for a long time, which may further cause the protective cover 40 to fall off.

In an embodiment, as shown in Figure 4, an included angle "c" between the side wall of the accommodating groove 11 and the bottom wall of the accommodating groove 11 is greater than 90° and less than 180°, which is favorable for the water in the accommodating groove 11 to flow out, and thereby avoiding water accumulation in the accommodating groove 11.

A charging pile is further provided according to the present application, which includes a cabinet and an emergency stop button assembly 100. The specific structure of the emergency stop button assembly 100 may be referred to the above embodiments. Since the charging pile adopts all the technical solutions of all the above embodiments, it has at least all the beneficial effects brought by the technical solutions of the above embodiments, which is not described in detail herein. The cabinet is provided with a mounting plate 60, the mounting plate 60 is provided with a mounting hole, and the emergency stop button assembly 100 is mounted at the mounting holes.

## Claims

1. An emergency stop button assembly (100), comprising:
a mounting base (10) comprising a first end (101) and a second end (102) arranged oppositely with respect to each other, wherein the first end (101) of the mounting base (10) is provided with an accommodating groove (11), and the second end (102) of the mounting base (10) is configured to pass through a mounting hole of a mounting plate (60);
an emergency stop button (20) mounted in the accommodating groove (11); and
a fastener (30) detachably mounted on the second end (102) of the mounting base (10), and the fastener (30) is configured to clamp the mounting plate (60) with the mounting base (10) in a case that the fastener (30) is mounted on the second end (102) of the mounting base (10),
the emergency stop button assembly (100) further comprises a protective cover (40), a limiting groove (111) is provided in a periphery of a groove opening of the accommodating groove (11) in a recessed manner, and the protective cover (40) is mounted at the limiting groove (111) to cover the groove opening of the accommodating groove (11),
**characterized in that**, the protective cover (40) comprises a support ring (41) and a hand-hold portion (42), each of both sides of the hand-hold portion (42) is provided with a connecting segment (43) configured to be connected with the support ring (41), and the support ring (41) is mounted at the limiting groove (111).

2. The emergency stop button assembly (100) according to claim 1, wherein the emergency stop button (20) comprises a trigger portion (21) and a connecting terminal (22) connected in sequence, wherein the trigger portion (21) is located in the accommodating groove (11), and the connecting terminal (22) extends out of the second end (102) of the mounting base (10).

3. The emergency stop button assembly (100) according to claim 2, wherein
the connecting terminal (22) and the mounting base (10) are integrally formed by injection molding; or,
the second end (102) of the mounting base (10) is provided with a through hole (12), and the connecting terminal (22) is arranged to extend out of the second end (102) of the mounting base (10) through the through hole (12).

4. The emergency stop button assembly (100) according to claim 1, wherein the mounting base (10) is cylindrical, an outer peripheral wall of the mounting base (10) is provided with threads, and a limiting portion (13) is arranged to protrude outward from the outer peripheral wall of the mounting base (10), wherein the fastener (30) is a nut, and the nut is screwed to the mounting base at the second end (102) of the mounting base (10).

5. The emergency stop button assembly (100) according to claim 4, wherein
the limiting portion (13) is a flange provided on a peripheral wall of the first end (101) of the mounting base (10); and/or,
the nut is a hexagonal nut.

6. The emergency stop button assembly (100) according to any one of claims 1 to 5, wherein the emergency stop button assembly (100) further comprises a sealing ring (50), the sealing ring (50) is sheathed on an outer peripheral wall of the mounting base (10) and is arranged to abut against the limiting portion (13).

7. The emergency stop button assembly (100) according to claim 1, wherein a positioning protrusion (112) is provided on a side wall of the limiting groove (111), a positioning notch (411) is provided on an outer peripheral wall of the support ring (41), the positioning protrusion (112) is arranged in the positioning notch (411), and the positioning notch (411) is located at a bisecting position of a corresponding segment of the support ring (41) between the two connecting segments (43).

8. The emergency stop button assembly (100) according to claim 1, wherein an adhesive layer is arranged between the support ring (41) and the limiting groove (111).

9. The emergency stop button assembly (100) according to claim 8, wherein an end face of the first end (101) of the mounting base (10) is provided with a fluid guiding protruding portion (14), and the fluid guiding protruding portion (14) comprises a first inclined guide plane (141) and a second inclined guide plane (142), one side of the first inclined guide plane (141) is connected to a peripheral edge of the groove opening of the limiting groove (111), the second inclined guide plane (142) is connected to another side of the first inclined guide plane (141), an included angle between the first inclined guide plane (141) and a side wall of the accommodating groove (11) is greater than 90° and less than 180°, and an included angle between the second inclined guide plane (142) and the side wall of the accommodating groove (11) is less than 90°.

10. The emergency stop button assembly (100) according to any one of claims 1 to 3, wherein an included angle between a side wall of the accommodating groove (11) and a bottom wall of the accommodating groove (11) is greater than 90° and less than 180°.

11. A charging pile, comprising:
a cabinet, being provided with a mounting plate (60), wherein the mounting plate (60) is provided with a mounting hole; and
the emergency stop button assembly (100) according to any one of claims 1 to 10 being mounted in the mounting hole.

## Patentansprüche

1. . Not-Aus-Taster-Anordnung (100), umfassend:
eine Montagebasis (10), die ein erstes Ende (101) und ein zweites Ende (102) umfasst, die gegenüberliegend zueinander angeordnet sind, wobei das erste Ende (101) der Montagebasis (10) mit einer Aufnahmenut (11) bereitgestellt ist, und das zweite Ende (102) der Montagebasis (10) so ausgebildet ist, dass es durch ein Montageloch einer Montageplatte (60) läuft;
einen Not-Aus-Taster (20), der in der Aufnahmenut (11) montiert ist; und
eine Befestigung (30), die lösbar an dem zweiten Ende (102) der Montagebasis (10) montiert ist, und die Befestigung (30) so ausgebildet ist, dass sie die Montageplatte (60) mit der Montagebasis (10) festklemmt, wenn die Befestigung (30) an dem zweiten Ende (102) der Montagebasis (10) montiert ist,
die Not-Halt-Taster-Anordnung (100) ferner eine Schutzabdeckung (40) umfasst, eine Begrenzungsnut (111) in einem Umfang einer Nutöffnung der Aufnahmenut (11) versenkt bereitgestellt ist und die Schutzabdeckung (40) an der Begrenzungsnut (111) zum Abdecken der Nutöffnung der Aufnahmenut (11) montiert ist,
**dadurch gekennzeichnet, dass** die Schutzabdeckung (40) einen Stützring (41) und einen Handgriffabschnitt (42) umfasst, wobei jede der beiden Seiten des Handgriffabschnitts (42) mit einem Verbindungssegment (43) bereitgestellt ist, das so ausgebildet ist, dass es mit dem Stützring (41) verbunden ist, und der Stützring (41) an der Begrenzungsnut (111) montiert ist.

2. . Not-Aus-Taster-Anordnung (100) nach Anspruch **1,** wobei der Not-Aus-Taster (20) einen Auslöseabschnitt (21) und ein Anschlussendgerät (22) umfasst, die in Sequenz geschaltet sind, wobei sich der Auslöseabschnitt (21) in der Aufnahmenut (11) befindet und das Anschlussendgerät (22) aus dem zweiten Ende (102) der Montagebasis (10) herausragt.

3. . Not-Aus-Taster-Anordnung (100) nach Anspruch 2, wobei
das Anschlussendgerät (22) und die Montagebasis (10) durch Spritzgießen integral gebildet sind; oder
das zweite Ende (102) der Montagebasis (10) mit einem Durchgangsloch (12) bereitgestellt ist, und das Anschlussendgerät (22) so angeordnet ist, dass es aus dem zweiten Ende (102) der Montagebasis (10) durch das Durchgangsloch (12) herausragt.

4. . Not-Aus-Taster-Anordnung (100) nach Anspruch 1, wobei die Montagebasis (10) zylindrisch ist, eine äußere Umfangswand der Montagebasis (10) mit Gewinden bereitgestellt ist und ein begrenzender Abschnitt (13) so angeordnet ist, dass er aus der äußeren Umfangswand der Montagebasis (10) herausragt, wobei die Befestigung (30) eine Mutter ist, und die Mutter an dem zweiten Ende (102) der Montagebasis (10) auf die Montagebasis aufgeschraubt ist.

5. . Not-Aus-Taster-Anordnung (100) nach Anspruch 4, wobei
der begrenzende Abschnitt (13) ein Flansch ist, der an einer Umfangswand des ersten Endes (101) der Montagebasis (10) bereitgestellt ist; und/oder
die Mutter eine Sechskantmutter ist.

6. . Not-Aus-Taster-Anordnung (100) nach einem der Ansprüche 1 bis 5, wobei die Not-Aus-Taster-Anordnung (100) ferner einen Dichtungsring (50) umfasst, der Dichtungsring (50) an einer äußeren Umfangswand der Montagebasis (10) ummantelt ist und so angeordnet ist, dass er an dem begrenzenden Abschnitt (13) anschlägt.

7. . Not-Aus-Taster-Anordnung (100) nach Anspruch 1, wobei ein Positioniervorsprung (112) an einer Seitenwand der Begrenzungsnut (111) bereitgestellt ist, eine Positionierkerbe (411) an einer äußeren Umfangswand des Stützrings (41) bereitgestellt ist, der Positioniervorsprung (112) in der Positionierkerbe (411) angeordnet ist, und die Positionierkerbe (411) sich an einer Bisecting-Position eines entsprechenden Segments des Stützrings (41) zwischen den beiden Verbindungssegmenten (43) befindet.

8. . Not-Aus-Taster-Anordnung (100) nach Anspruch 1, wobei zwischen dem Stützring (41) und der Begrenzungsnut (111) eine Klebeschicht angeordnet ist.

9. . Not-Aus-Taster-Anordnung (100) nach Anspruch 8, wobei eine Stirnseite des ersten Endes (101) der Montagebasis (10) mit einem Fluidführungsabschnitt (14) bereitgestellt ist, und der Fluidführungsabschnitt (14) eine erste geneigte Führungsebene (141) und eine zweite geneigte Führungsebene (142) umfasst, eine Seite der ersten geneigten Führungsebene (141) mit einer Umfangskante der Nutöffnung der Begrenzungsnut (111) verbunden ist, die zweite geneigte Führungsebene (142) mit einer anderen Seite der ersten geneigten Führungsebene (141) verbunden ist, ein eingeschlossener Winkel zwischen der ersten geneigten Führungsebene (141) und einer Seitenwand der Aufnahmenut (11) größer als 90° und kleiner als 180° ist, und ein eingeschlossener Winkel zwischen der zweiten geneigten Führungsebene (142) und der Seitenwand der Aufnahmenut (11) kleiner als 90° ist.

10. . Not-Aus-Taster-Anordnung (100) nach einem der Ansprüche 1 bis 3, wobei ein eingeschlossener Winkel zwischen einer Seitenwand der Aufnahmenut (11) und einer Bodenwand der Aufnahmenut (11) größer als 90° und kleiner als 180° ist.

11. . Ladesäule, umfassend:
einen Schrank, der mit einer Montageplatte (60) bereitgestellt ist, wobei die Montageplatte (60) mit einem Montageloch bereitgestellt ist; und
die in dem Montageloch montierte Not-Aus-Taster-Anordnung (100) nach einem der Ansprüche 1 bis 10.

## Revendications

1. Ensemble (100) bouton d'arrêt d'urgence, comprenant :
une base de montage (10) comprenant une première extrémité (101) et une deuxième extrémité (102) agencées de manière opposée l'une à l'autre, dans lequel la première extrémité (101) de la base de montage (10) est munie d'une rainure de logement (11), et la deuxième extrémité (102) de la base de montage (10) est configurée pour passer à travers un trou de montage d'une plaque de montage (60) ;
un bouton d'arrêt d'urgence (20) monté dans la rainure de logement (11) ; et
une fixation (30) montée de manière détachable sur la deuxième extrémité (102) de la base de montage (10), et la fixation (30) est configurée pour serrer la plaque de montage (60) avec la base de montage (10) dans un cas où la fixation (30) est montée sur la deuxième extrémité (102) de la base de montage (10),
l'ensemble (100) bouton d'arrêt d'urgence comprend en outre un couvercle de protection (40), une rainure de limitation (111) est disposée en périphérie d'une ouverture de rainure de la rainure de logement (11) de manière évidée, et le couvercle de protection (40) est monté au niveau de la rainure de limitation (111) pour recouvrir l'ouverture de rainure de la rainure de logement (11),
**caractérisé en ce que** le couvercle de protection (40) comprend une bague de support (41) et une portion de préhension (42), chacun des deux côtés de la portion de préhension (42) est muni d'un segment de liaison (43) configuré pour être relié à la bague de support (41), et la bague de support (41) est montée au niveau de la rainure de limitation (111).

2. Ensemble (100) bouton d'arrêt d'urgence selon la revendication 1, dans lequel le bouton d'arrêt d'urgence (20) comprend une portion de déclenchement (21) et une borne de connexion (22) reliées en séquence, dans lequel la portion de déclenchement (21) est située dans la rainure de logement (11), et la borne de connexion (22) s'étend hors de la deuxième extrémité (102) de la base de montage (10).

3. Ensemble (100) bouton d'arrêt d'urgence selon la revendication 2, dans lequel
la borne de connexion (22) et la base de montage (10) sont formées d'un seul tenant par moulage par injection ; ou,
la deuxième extrémité (102) de la base de montage (10) est munie d'un trou traversant (12), et la borne de connexion (22) est agencée pour s'étendre hors de la deuxième extrémité (102) de la base de montage (10) à travers le trou traversant (12).

4. Ensemble (100) bouton d'arrêt d'urgence selon la revendication 1, dans lequel la base de montage (10) est cylindrique, une paroi périphérique externe de la base de montage (10) est munie de filetages, et une portion de limitation (13) est agencée pour faire saillie vers l'extérieur à partir de la paroi périphérique externe de la base de montage (10), dans lequel la fixation (30) est un écrou, et l'écrou est vissé à la base de montage au niveau de la deuxième extrémité (102) de la base de montage (10).

5. Ensemble (100) bouton d'arrêt d'urgence selon la revendication 4, dans lequel
la portion de limitation (13) est une bride disposée sur une paroi périphérique de la première extrémité (101) de la base de montage (10) ; et/ou,
l'écrou est un écrou hexagonal.

6. Ensemble (100) bouton d'arrêt d'urgence selon l'une quelconque des revendications 1 à 5, dans lequel l'ensemble (100) bouton d'arrêt d'urgence comprend en outre une bague d'étanchéité (50), la bague d'étanchéité (50) est gainée sur une paroi périphérique externe de la base de montage (10) et est agencée pour venir en butée contre la portion de limitation (13).

7. Ensemble (100) bouton d'arrêt d'urgence selon la revendication 1, dans lequel une saillie de positionnement (112) est prévue sur une paroi latérale de la rainure de limitation (111), une encoche de positionnement (411) est ménagée sur une paroi périphérique externe de la bague de support (41), la saillie de positionnement (112) est agencée dans l'encoche de positionnement (411), et l'encoche de positionnement (411) est située à une position bissectrice d'un segment correspondant de la bague de support (41) entre les deux segments de liaison (43).

8. Ensemble (100) bouton d'arrêt d'urgence selon la revendication 1, dans lequel une couche adhésive est agencée entre la bague de support (41) et la rainure de limitation (111).

9. Ensemble (100) bouton d'arrêt d'urgence selon la revendication 8, dans lequel une face d'extrémité de la première extrémité (101) de la base de montage (10) est munie d'une portion saillante (14) de guidage de fluide, et la portion saillante (14) de guidage de fluide comprend un premier plan de guidage incliné (141) et un deuxième plan de guidage incliné (142), un côté du premier plan de guidage incliné (141) est relié à un bord périphérique de l'ouverture de rainure de la rainure de limitation (111), le deuxième plan de guidage incliné (142) est relié à un autre côté du premier plan de guidage incliné (141), un angle inclus entre le premier plan de guidage incliné (141)et une paroi latérale de la rainure de logement (11) est supérieur à 90° et inférieur à 180°, et un angle inclus entre le deuxième plan de guidage incliné (142) et la paroi latérale de la rainure de logement (11) est inférieur à 90°.

10. Ensemble (100) bouton d'arrêt d'urgence selon l'une quelconque des revendications 1 à 3, dans lequel un angle inclus entre une paroi latérale de la rainure de logement (11) et une paroi inférieure de la rainure de logement (11) est supérieur à 90° et inférieur à 180°.

11. Pile de charge, comprenant :
une armoire, munie d'une plaque de montage (60), dans laquelle la plaque de montage (60) est munie d'un trou de montage ; et
l'ensemble (100) bouton d'arrêt d'urgence selon l'une quelconque des revendications 1 à 10 monté dans le trou de montage.
